# EUROPEAN PATENT APPLICATION

(11) **EP 4 760 888 A1**
(43) Date of publication of application: **17.06.2026**
(21) Application number: 25837479.2
(22) Date of filing: 04.07.2025
(51) Int. Cl.: H01M 10/659, H01M 10/6552, H01M 10/6567, H01M 10/6569, H01M 10/613, H01M 10/625, H01M 50/204, H01M 50/24, H01M 50/249

(54) **BATTERY DEVICE**

(30) Priority: 11.07.2024 KR 20240091614
(71) Applicant: LG Energy Solution, Ltd., Seoul 07335 (KR)
(72) Inventor: KANG, Ho Sung, Daejeon 34122 (KR); CHOI, Jong Hwa, Daejeon 34122 (KR); LEE, Jae Hyun, Daejeon 34122 (KR)
(74) Representative: BCKIP Part mbB
(86) International application number: PCT/KR2025/009569
(87) International publication number: WO 2026/014815

(57) **Abstract**

Disclosed herein relates to a battery device including: a plurality of cell assemblies each comprising a plurality of battery cells; a housing including a base frame supporting the plurality of cell assemblies and a side frame surrounding the plurality of cell assemblies; and a first endothermic structure connected to the base frame so as to be overlapping vertically with the plurality of cell assemblies and including a phase change material.

## Description

### [Technical Field]

The present disclosure relates to a battery device.

This application claims the benefit of Korean Patent Application No. 10-2024-0091614, filed on July 11, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the range of battery electric vehicles (BEVs) has increased to levels comparable to fuel vehicles, the primary use of secondary batteries is shifting from mobile devices to mobility.

As secondary batteries are used in mobility applications, the demand for their safety has increased. If accidents such as fires occur in secondary batteries used in mobility, the life of the driver can be endangered. Therefore, research on technologies to enhance the safety of secondary batteries is indispensable.

### [Summary]

### [Technical Problem]

The technical problem addressed by the present disclosure is to provide a battery device.

### [Technical Solution]

To solve the aforementioned problem, the technical concept of the present disclosure provides a battery device including: a plurality of cell assemblies each including a plurality of battery cells; a housing including a base frame supporting the plurality of cell assemblies and a side frame surrounding the plurality of cell assemblies; and a first endothermic structure connected to the base frame so as to be overlapping vertically with the plurality of cell assemblies and including a phase change material.

In exemplary embodiments, the first endothermic structure includes a plurality of endothermic layers connected to the outer surface of the base frame exposed to the outside and spaced apart from each other, wherein the plurality of endothermic layers is each overlapping vertically with a corresponding cell assembly among the plurality of cell assemblies.

In exemplary embodiments, the battery device further includes a cover layer covering the plurality of endothermic layers.

In exemplary embodiments, the battery device further includes a thermally conductive adhesive layer for attaching the plurality of cell assemblies to the base frame, wherein the first endothermic structure includes a plurality of endothermic layers connected to the thermally conductive adhesive layer, and the plurality of endothermic layers are each overlapping vertically with a corresponding cell assembly among the plurality of cell assemblies.

In exemplary embodiments, the base frame includes: a first channel configured for cooling fluid to flow; and a second channel separated from the first channel, wherein the first channel and the second channel each extend horizontally from one side of the base frame, wherein the first endothermic structure is accommodated within the second channel of the base frame, and includes an endothermic layer overlapping vertically with the plurality of cell assemblies.

In exemplary embodiments, the endothermic layer is exposed outside the base frame through the one side of the base frame.

In exemplary embodiments, the battery device further includes a thermal barrier layer inserted within the base frame and disposed between the first channel and the second channel.

In exemplary embodiments, the base frame includes: a first channel configured for cooling fluid to flow; and a second channel separated from the first channel and extending from the outer surface of the base frame, wherein the first endothermic structure includes: a first endothermic layer extending along the outer surface of the base frame; and a second endothermic layer connected to the first endothermic layer and accommodated in the second channel of the base frame.

In exemplary embodiments, the battery device further includes a second endothermic structure connected to the side frame and including a phase change material.

In exemplary embodiments, the second endothermic structure is connected to the outer surface of the side frame exposed to the outside.

In exemplary embodiments, the second endothermic structure is connected to the inner surface of the side frame facing the plurality of cell assemblies.

In exemplary embodiments, the second endothermic structure is inserted within the side frame.

To solve the aforementioned problem, the technical concept of the present disclosure provides a battery device including: a plurality of cell assemblies each including a plurality of battery cells; a housing including a base frame supporting the plurality of cell assemblies and a side frame surrounding the plurality of cell assemblies; and an endothermic structure connected to the base frame and including a phase change material, wherein the base frame comprises a first channel configured for cooling fluid to flow and a second channel separated from the first channel, wherein the endothermic structure is accommodated within the second channel of the base frame and includes a first endothermic layer overlapping vertically with the plurality of cell assemblies.

In exemplary embodiments, the endothermic structure further includes a second endothermic layer extending along the outer surface of the base frame exposed to the outside, wherein the first endothermic layer and the second endothermic layer are connected to each other.

In exemplary embodiments, the battery device further includes a thermal barrier layer inserted within the base frame and disposed between the first channel and the second channel.

### [Advantageous Effects]

According to exemplary embodiments of the present disclosure, a battery device may include an endothermic structure attached to a housing and configured to absorb heat. When a thermal event, such as thermal runaway of a battery cell, occurs, the heat generated from the cell assembly where the thermal event occurred is absorbed by the endothermic structure. This prevents and suppresses the transfer of heat generated from the cell assembly where the thermal event occurred to other cell assemblies via the base frame.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a cross-sectional view showing a battery device according to exemplary embodiments of the present disclosure.
FIG. 2 is a cross-sectional view of the battery device along line II-II' of FIG. 1.
FIG. 3 is a cross-sectional view showing a battery device according to exemplary embodiments of the present disclosure.
FIG. 4 is a cross-sectional view showing a battery device according to exemplary embodiments of the present disclosure.
FIG. 5 is a cross-sectional view showing a battery device according to exemplary embodiments of the present disclosure.
FIG. 6 is a cross-sectional view showing the base frame of the battery device of FIG. 5.
FIG. 7 is a cross-sectional view showing the base frame of the battery device according to exemplary embodiments of the present disclosure.
FIG. 8 is a cross-sectional view showing a battery device according to exemplary embodiments of the present disclosure.
FIG. 9 is a cross-sectional view showing the base frame of the battery device of FIG. 8.
FIG. 10 is a cross-sectional view showing a battery device according to exemplary embodiments of the present disclosure.
FIG. 11 is a cross-sectional view showing a battery device according to exemplary embodiments of the present disclosure.
FIG. 12 is a cross-sectional view showing a battery device according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

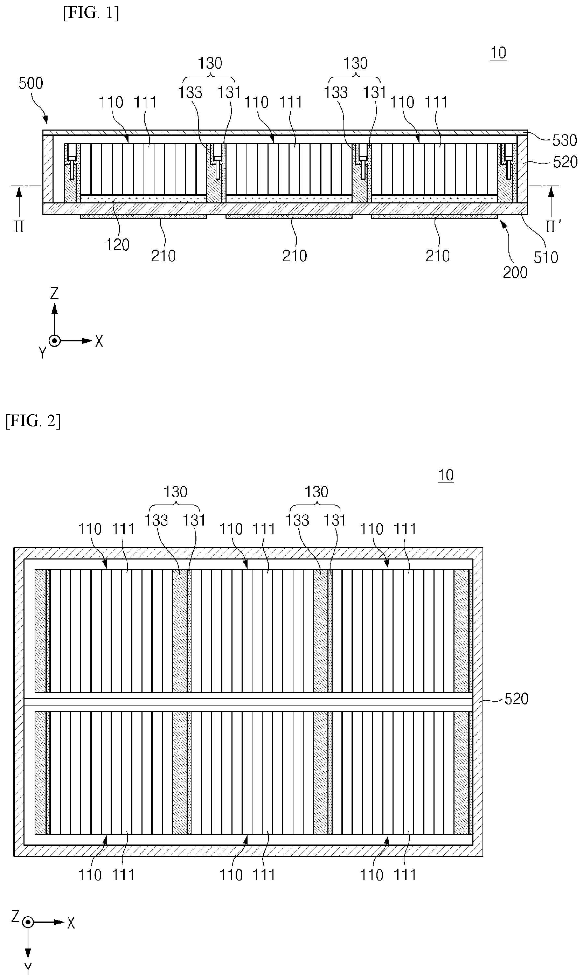

FIG. 1 is a cross-sectional view showing a battery device 10 according to exemplary embodiments of the present disclosure. FIG. 2 is a cross-sectional view showing the battery device 10 along line II-II' of FIG. 1.

Referring to FIGS. 1 and 2, the battery device 10 may include a housing 500, a plurality of cell assemblies 110, and a first endothermic structure 200.

The housing 500 may provide an internal space for accommodating the plurality of cell assemblies 110. The housing 500 may include a base frame 510, a side frame 520, and a top frame 530.

The base frame 510 can support a plurality of cell assemblies 110. The base frame 510 may have a plate-like form extending in a first horizontal direction (e.g., X-direction) and a second horizontal direction (e.g., Y-direction). For example, the base frame 510 may include frames manufactured via an extrusion process.

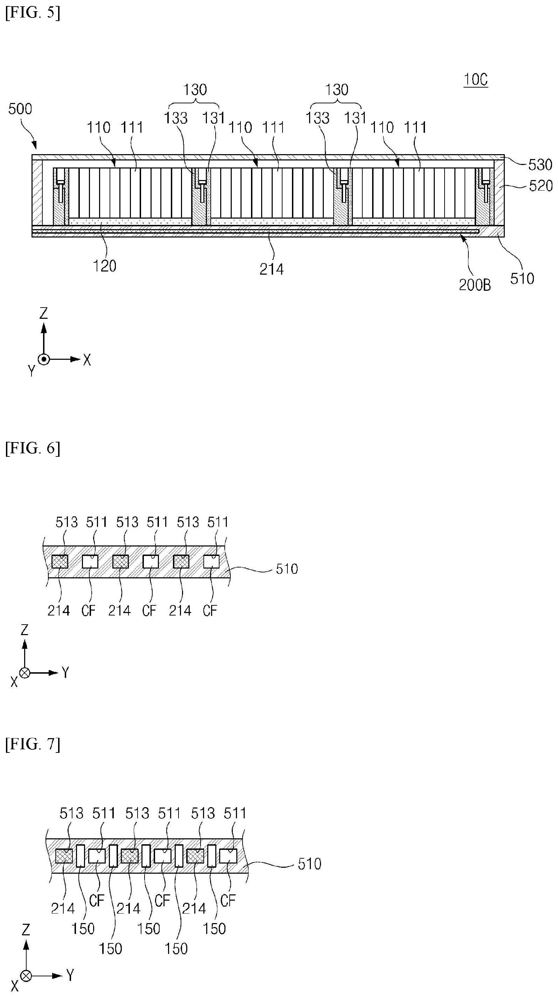

The base frame 510 may include a first channel (511 in FIG. 6) configured to allow cooling fluid (CF in FIG. 6) to flow. The first channel 511 of the base frame 510 may extend from one side of the base frame 510 in a first horizontal direction (e.g., X-direction). Cooling fluid CF provided externally to the base frame 510 may be supplied to an inlet of the first channel 511, flow along the first channel 511, and be discharged externally through an outlet of the first channel 511. While the cooling fluid CF flows along the first channel 511, cooling of the plurality of cell assemblies 110 can be performed. The cooling fluid CF may include coolant and/or refrigerant. The housing 500 may be equipped with a pipe configured to deliver the cooling fluid CF to the first channel 511 of the base frame 510. An externally supplied cooling fluid CF may be delivered through the pipe to the first channel 511 of the base frame 510. For example, the temperature range of the cooling fluid CF flowing along the base frame 510 may be approximately between 10°C and 40°C, but is not limited thereto.

In exemplary embodiments, the base frame 510 may include a plurality of first channels 511. The plurality of first channels 511 may each extend in a first horizontal direction (e.g., X-direction) and may be overlapped in a vertical direction (e.g., Z-direction) with two or more cell assemblies 110. The plurality of first channels 511 may be spaced apart from each other in a second horizontal direction (e.g., Y-direction).

The side frame 520 may be coupled around the perimeter of the base frame 510 and extend along the perimeter of the base frame 510. The side frame 520 may surround the plurality of cell assemblies 110.

The top frame 530 may be fastened onto the side frame 520 to cover the plurality of cell assemblies 110. The top frame 530 may have a plate-like form extending in a first horizontal direction (e.g., X-direction) and a second horizontal direction (e.g., Y-direction). The top frame 530 may be spaced vertically (e.g., Z-direction) from the plurality of cell assemblies 110.

The plurality of cell assemblies 110 may be mounted on the base frame 510 and arranged in a first horizontal direction (e.g., X-direction) and a second horizontal direction (e.g., Y-direction). Each of the plurality of cell assemblies 110 may include a plurality of battery cells 111.

Each battery cell 111 is a lithium-ion battery, i.e., the basic unit of a secondary battery. Each battery cell 111 may include an electrode assembly, an electrolyte, and a cell case. The electrode assembly embedded within the cell case may include a positive electrode, a negative electrode, and a separator interposed between the positive and negative electrodes. The electrode assembly may be either a jelly-roll type or a stack-type, depending on the assembly form. A jelly-roll type electrode assembly may include a wound structure including a positive electrode, a negative electrode, and a separator interposed between them. A stack-type electrode assembly may include a plurality of positive electrodes, a plurality of negative electrodes, and a plurality of separators interposed between them, stacked sequentially. The positive electrode may include a positive electrode current collector and a positive electrode active material. The negative electrode may include a negative electrode current collector and a negative electrode active material.

Each battery cell 111 may correspond to a pouch-type battery cell, a cylindrical battery cell, or a prismatic battery cell. The electrode assembly of a pouch-type battery cell is embedded within a pouch case including an aluminum laminate sheet. The electrode assembly of a cylindrical battery cell is embedded within a cylindrical metal can. The electrode assembly of a prismatic battery cell is embedded within a prismatic metal can.

A plurality of battery cells 111 provided in each cell assembly 110 may be connected in series and/or parallel. For example, a plurality of battery cells 111 may be connected in series with each other. For example, a plurality of battery cells 111 may also be connected in parallel with each other. For example, when defining a set of two or more battery cells 111 connected in parallel as a bank, one bank composed of two or more battery cells 111 connected in parallel and another bank composed of two or more battery cells 111 connected in parallel may be connected in series.

In exemplary embodiments, the plurality of battery cells 111 provided in each cell assembly 110 may be arranged in a first horizontal direction (e.g., X-direction), and each battery cell 111 may extend in a second horizontal direction (e.g., Y-direction). An electrode lead may be provided at at least one of the two ends of each battery cell 111 along the second horizontal direction (e.g., Y-direction). The electrode leads of adjacent battery cells 111 among the plurality of battery cells 111 may be electrically and physically connected to each other.

The cell assembly 110 may include a busbar frame connected to the sides of the plurality of battery cells 111. The busbar frame may be disposed at each of the two ends along the second horizontal direction (e.g., Y-direction) of the cell assembly 110. The busbar frame may support the busbars and the electrode leads of the battery cells 111. The busbars may be electrically and physically connected to at least one of the electrode leads of the plurality of battery cells 111. The busbars may be coupled to at least one of the electrode leads of the plurality of battery cells 111 by welding.

A plurality of separation walls 130 may be provided on the base frame 510. The plurality of separation walls 130 may each be fastened to the base frame 510. Each separation wall 130 may extend in a second horizontal direction (e.g., Y-direction) and a vertical direction (e.g., Z-direction). The plurality of separation walls 130 may each separate two cell assemblies 110 adjacent to each other in a first horizontal direction (e.g., X-direction) among the plurality of cell assemblies 110. Both sides of each separation wall 130 may be attached to battery cells 111 of corresponding cell assemblies 110.

Each separation wall 130 may include an upper separation wall 131 and a lower separation wall 133. The upper separation wall 131 may be seated on the lower separation wall 133 and may be fastened to the lower separation wall 133 by fastening members such as fastening bolts. One side of each cell assembly 110 may be coupled to the upper separation wall 131, and the other side of each cell assembly 110 may be coupled to the lower separation wall 133. In exemplary embodiments, each cell assembly 110 may form a single unit together with the upper separation wall 131 and the lower separation wall 133.

A thermally conductive adhesive layer 120 may be disposed between each of the plurality of cell assemblies 110 and the base frame 510. The thermally conductive adhesive layer 120 may attach the plurality of cell assemblies 110 to the base frame 510. The upper part of the thermally conductive adhesive layer 120 may be in direct contact with each of the plurality of battery cells 111, and the lower part of the thermally conductive adhesive layer 120 may be in direct contact with the base frame 510. The thermally conductive adhesive layer 120 can thermally and physically couple each of the plurality of battery cells 111 to the base frame 510. The thermally conductive adhesive layer 120 may include a thermal resin and/or a thermal interface material.

A first endothermic structure 200 may be connected to the base frame 510. The first endothermic structure 200 may include an endothermic material. The first endothermic structure 200 may be overlapping vertically (e.g., Z-direction) with each of the plurality of cell assemblies 110. When a thermal event, such as thermal runaway of a battery cell 111, occurs, the first endothermic structure 200 can absorb heat generated from the cell assembly 110 where the thermal event occurred, thereby preventing and suppressing the transfer of heat generated from the affected cell assembly 110 to other cell assemblies 110 via the base frame 510.

In exemplary embodiments, the first endothermic structure 200 may include a phase change material. The phase change material may be configured to accumulate or release heat during the phase change process at a phase change temperature. In exemplary embodiments, the phase change material of the first endothermic structure 200 may be configured to undergo a phase change between a solid state and a liquid state at the phase change temperature, or may be configured to undergo a phase change between a liquid state and a gas state.

For example, the phase change material of the first endothermic structure 200 may include organic phase change materials such as paraffin-based phase change materials and/or inorganic phase change materials such as calcium chloride. In exemplary embodiments, the first endothermic structure 200 may include phase change material capsules containing the phase change material. For example, the first endothermic structure 200 may include a base layer made of resin and phase change material capsules contained within the base layer. For example, the first endothermic structure 200 may include a phase change material having a phase change temperature between 30°C and 100°C.

In exemplary embodiments, the phase change temperature of the phase change material in the first endothermic structure 200 may be greater than the upper limit of the normal operating temperature range of the battery cells 111. For example, the normal operating temperature range of the battery cells 111 may be between -20°C and 60°C, between -15°C and 55°C, or between -15°C and 50°C.

In exemplary embodiments, the phase change temperature of the phase change material in the first endothermic structure 200 may be greater than the upper limit of the temperature range of the cooling fluid CF flowing along the base frame 510. For example, the temperature range of the cooling fluid CF may be between 10°C and 40°C, between 15°C and 35°C, or between 20°C and 30°C.

In exemplary embodiments, the first endothermic structure 200 includes an absorbent member such as a super absorbent polymer (SAP), wherein the absorbent member may include water capable of absorbing heat. The super absorbent polymer may include polyacrylamide, polyacrylic acid, polymethacrylic acid, polyethylene oxide, polyvinyl alcohol, gelatin, polysaccharide, chitosan, sodium carboxymethylcellulose, or combinations thereof, but the present disclosure is not limited thereto. In some embodiments, the absorbent member may be in the form of powder, granules, pellets, slabs, etc., and is not particularly limited.

The first endothermic structure 200 may include a plurality of first endothermic layers 210 attached to the base frame 510. The plurality of first endothermic layers 210 may be spaced apart from each other. The plurality of first endothermic layers 210 may each extend along the outer surface of the base frame 510 exposed outside the battery device 10. The plurality of first endothermic layers 210 may each be vertically overlapping with a corresponding cell assembly 110 among the plurality of cell assemblies 110. For example, when viewed in a plane, the plurality of first endothermic layers 210 may each have a rectangular pad shape overlapping a corresponding cell assembly 110. In exemplary embodiments, the plurality of first endothermic layers 210 may each include the same phase change material. In exemplary embodiments, the plurality of first endothermic layers 210 may include phase change materials having different phase change temperatures. When the first endothermic structure 200 has a plurality of first endothermic layers 210 spaced apart from each other, the plurality of first endothermic layers 210 are individually attached to the base frame 510, enabling individual replacement of the plurality of first endothermic layers 210 and allowing different thermal characteristics (e.g., phase change temperature) to be assigned to each of the plurality of first endothermic layers 210.

### (Second embodiment)

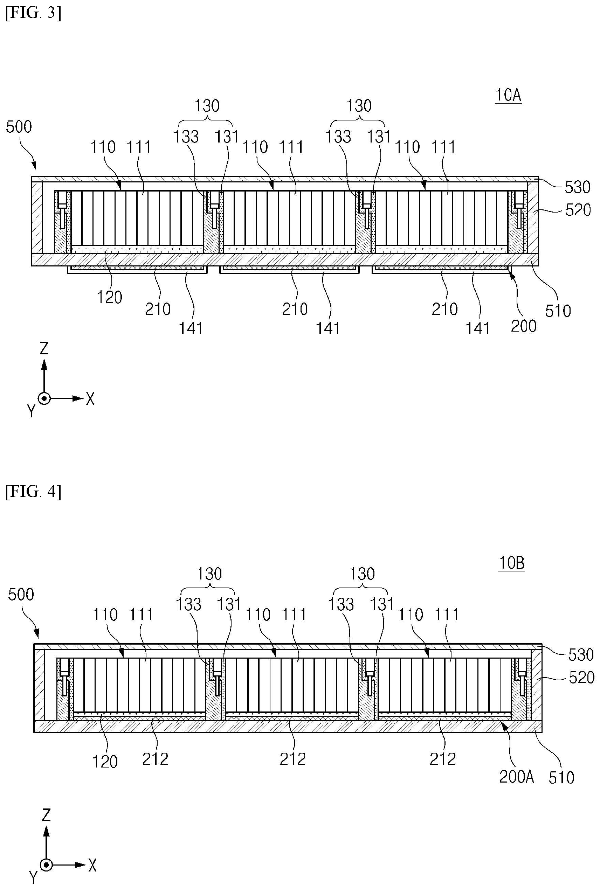

FIG. 3 is a cross-sectional view showing a battery device 10A according to exemplary embodiments of the present disclosure. Hereinafter, the battery device 10A shown in FIG. 3 will be described, focusing on the differences from the battery device 10 shown in FIGS. 1 and 2.

Referring to FIG. 3, the battery device 10A may include a cover layer 141 covering a plurality of first endothermic layers 210. When the battery device 10A is mounted in a mobile device such as an electric vehicle, the plurality of first endothermic layers 210 attached to the outer surface of the base frame 510 may be exposed to the external environment. The cover layer 141 covers the plurality of first endothermic layers 210, thereby preventing the plurality of first endothermic layers 210 from being damaged by exposure to the external environment or from peeling away from the base frame 510.

In exemplary embodiments, the cover layer 141 may include an insulating material. In this case, the thermal conductivity of the cover layer 141 may be lower than that of the base frame 510. The cover layer 141 containing the insulating material can suppress thermal exposure of the plurality of first endothermic layers 210 to the external environment. The insulating material may include glass fiber, polyurethane, polystyrene, expanded graphite, vermiculite, perlite, or combinations thereof. When the first endothermic layer 210 is exposed to a high-temperature environment, the adhesive strength between the first endothermic layer 210 and the base frame 510 may deteriorate, posing a risk of the first endothermic layer 210 peeling away from the base frame 510. The cover layer 140 can suppress exposure of the first endothermic layer 210 to a high-temperature environment, thereby preventing delamination of the first endothermic layer 210 from the base frame 510 due to adhesion degradation between the first endothermic layer 210 and the base frame 510.

### (Third embodiment)

FIG. 4 is a cross-sectional view showing a battery device 10B according to exemplary embodiments of the present disclosure. Hereinafter, the battery device 10B shown in FIG. 4 will be described, focusing on the differences from the battery device 10 of FIGS. 1 and 2.

Referring to FIG. 4, in the battery device 10B, the first endothermic structure 200A may include a plurality of second endothermic layers 212 attached to the inner surface of the base frame 510 facing the plurality of cell assemblies 110. The plurality of second endothermic layers 212 may each be overlapping in a vertical direction (e.g., Z-direction) with a corresponding cell assembly 110 among the plurality of cell assemblies 110. A thermally conductive adhesive layer 120 may be interposed between each of the plurality of second endothermic layers 212 and each of the plurality of cell assemblies 110. A portion of the thermally conductive adhesive layer 120 may extend along the plurality of second endothermic layers 212, and another portion of the thermally conductive adhesive layer 120 may be in direct contact with the base frame 510. The thermally conductive adhesive layer 120 may be disposed on the plurality of second endothermic layers 212 and may extend along the plurality of second endothermic layers 212. In exemplary embodiments, the battery device 10B may include first endothermic layers (210 in FIG. 1) attached to the outer surface of the base frame 510 and second endothermic layers 212 connected to the thermally conductive adhesive layer 120.

The plurality of second endothermic layers 212 can absorb heat generated from the battery cells 111, thereby preventing and suppressing heat transfer through the base frame 510. Furthermore, since the heat generated by the battery cells 111 is absorbed by the plurality of second endothermic layers 212 connected to the thermally conductive adhesive layer 120, thermal deformation of the thermally conductive adhesive layer 120 can be suppressed, and the thermal and physical coupling between the battery cells 111 and the base frame 510 using the thermally conductive adhesive layer 120 can be maintained more robustly.

### (Fourth embodiment)

FIG. 5 is a cross-sectional view illustrating a battery device 10C according to exemplary embodiments of the present disclosure. FIG. 6 is a cross-sectional view illustrating the base frame 510 of the battery device 10C shown in FIG. 5. Hereinafter, the battery device 10C shown in FIGS. 5 and 6 will be described, focusing on the differences from the battery device 10 of FIGS. 1 and 2.

Referring to FIGS. 5 and 6, in the battery device 10C, the first endothermic structure 200B may include a third endothermic layer 214 inserted within the base frame 510. The third endothermic layer 214 may be inserted within a second channel 513 of the base frame 510. The second channel 513 of the base frame 510 may extend in a first horizontal direction (e.g., X-direction) from one side of the base frame 510. The third endothermic layer 214 may extend in the first horizontal direction (e.g., X-direction) along the second channel 513 of the base frame 510. The third endothermic layer 214 may be overlapping vertically (e.g., Z-direction) with two or more cell assemblies 110.

In exemplary embodiments, one end of the second channel 513 of the base frame 510 along the first horizontal direction (e.g., X-direction) may be exposed outside the base frame 510 through one side of the base frame 510, and one end of the third endothermic layer 214 along its first horizontal direction (e.g., X-direction) may be exposed outside the base frame 510 through one side of the base frame 510. Through the exposed end of the second channel 513 of the base frame 510, the material constituting the third endothermic layer 214 can be injected into the second channel 513 of the base frame 510 or discharged from the second channel 513 of the base frame 510 to the outside. The third endothermic layer 214 may be composed of a phase change material configured to absorb heat generated from the battery cells 111 by undergoing a phase change from a solid state to a liquid state. In this case, when a thermal event occurs within the battery device 10C, the phase change material of the third endothermic layer 214 undergoes a phase change to a liquid state, and the liquid phase change material can be discharged externally through the end of the second channel 513 of the base frame 510.

The base frame 510 may include a plurality of first channels 511 mutually spaced apart in the second horizontal direction (e.g., Y-direction) and a plurality of second channels 513 mutually spaced apart in the second horizontal direction (e.g., Y-direction). The plurality of first channels 511 may each extend in a first horizontal direction (e.g., X-direction), and the plurality of second channels 513 may each extend in a first horizontal direction (e.g., X-direction). Cooling fluid CF may be supplied to each of the plurality of first channels 511 and may flow along each of the plurality of first channels 511 in the first horizontal direction (e.g., X-direction). The first endothermic structure 200B may include a plurality of third endothermic layers 214 provided within the plurality of second channels 513 of the base frame 510. The plurality of third endothermic layers 214 may be mutually spaced apart in the second horizontal direction (e.g., Y-direction), and the plurality of third endothermic layers 214 may each extend in a first horizontal direction (e.g., X-direction). In the base frame 510, at least one first channel 511 through which a cooling fluid CF flows may be disposed between two third endothermic layers 214 adjacent in the second horizontal direction (e.g., Y-direction).

In exemplary embodiments, the battery device 10C may include first endothermic layers (210 in FIG. 1) attached to the outer surface of the base frame 510, second endothermic layers (212 in FIG. 4) connected to a thermally conductive adhesive layer 120, and third endothermic layers 214 provided within the base frame 510.

### (Fifth embodiment)

FIG. 7 is a cross-sectional view showing the base frame 510 of a battery device according to exemplary embodiments of the present disclosure. Hereinafter, the battery device shown in FIG. 7 will be described, focusing on the differences from the battery device 10C of FIGS. 5 and 6.

Referring to FIG. 7, the battery device may further include a plurality of thermal barrier layers 150 disposed within the base frame 510. The plurality of thermal barrier layers 150 may each be disposed between a first channel 511 and a second channel 513 adjacent in a second horizontal direction (e.g., Y-direction) and may extend in a first horizontal direction (e.g., X-direction) and a vertical direction (e.g., Z-direction). For example, the base frame 510 may include a third channel disposed between the first channel 511 and the second channel 513, and the thermal barrier layer 150 may be inserted within the third channel of the base frame 510. The thermal barrier layer 150 may induce heat transfer in the vertical direction (e.g., Z-direction) within the base frame 510 and may be disposed between the first channel 511 and the second channel 513 to block or inhibit heat transfer between the first channel 511 and the second channel 513. The thermal barrier layer 150 may include glass fiber, polyurethane, polystyrene, expanded graphite, vermiculite, perlite, or combinations thereof.

### (Sixth embodiment)

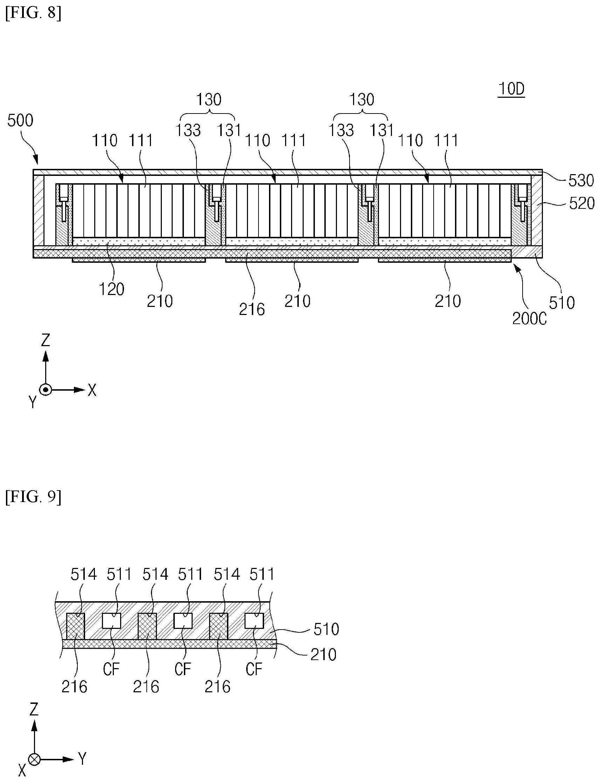

FIG. 8 is a cross-sectional view showing a battery device 10D according to exemplary embodiments of the present disclosure. FIG. 9 is a cross-sectional view showing the base frame 510 of the battery device 10D of FIG. 8. Hereinafter, the battery device 10D shown in FIGS. 8 and 9 will be described, focusing on the differences from the battery device 10 of FIGS. 1 and 2.

Referring to FIGS. 8 and 9, in the battery device 10D, the first endothermic structure 200C may include a first endothermic layer 210 extending along the outer surface of the base frame 510 and a plurality of fourth endothermic layers 216 accommodated in a plurality of second channels 514 of the base frame 510. The plurality of second channels 514 may each extend in a first horizontal direction (e.g., X-direction), and the plurality of second channels 514 may be mutually spaced apart in a second horizontal direction (e.g., Y-direction). The plurality of second channels 514 may each extend from an outer surface of the base frame 510, and the plurality of fourth endothermic layers 216 accommodated within the plurality of second channels 514 may be connected to the first endothermic layer 210. In the base frame 510, at least one first channel 511 through which a cooling fluid CF flows may be disposed between two adjacent fourth endothermic layers 216. In exemplary embodiments, the fourth endothermic layer 216 may include the same phase change material as the phase change material of the first endothermic layer 210. In exemplary embodiments, the phase change temperature of the phase change material in the fourth endothermic layer 216 may differ from the phase change temperature of the phase change material in the first endothermic layer 210.

### (Seventh embodiment)

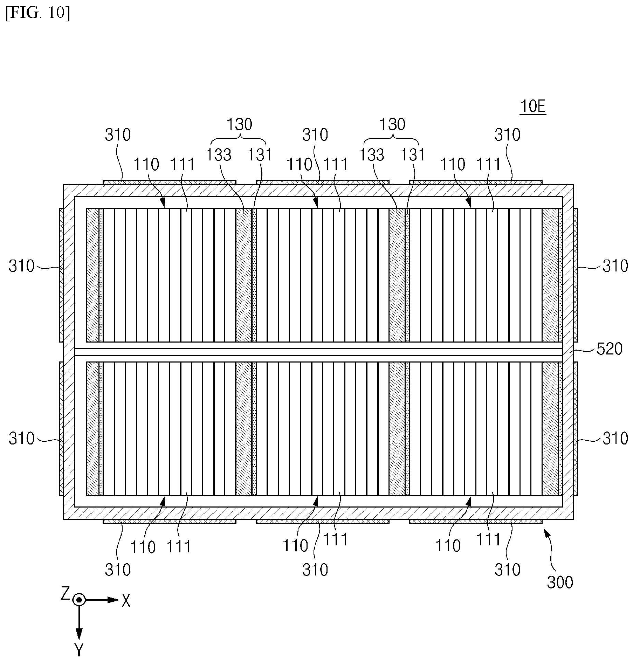

FIG. 10 is a cross-sectional view illustrating a battery device 10E according to exemplary embodiments of the present disclosure. Hereinafter, the battery device 10E shown in FIG. 10 will be described, focusing on the differences from the battery device 10 of FIG. 1 and 2.

Referring to FIG. 10, the battery device 10E may include a second endothermic structure 300 connected to the side frame 520. When a thermal event, such as thermal runaway of the battery cell 111, occurs, the second endothermic structure 300 absorbs heat generated from the cell assembly 110 where the thermal event occurred. This prevents and suppresses the heat generated from the affected cell assembly 110 from transferring to other cell assemblies 110 via the side frame 520. The battery device 10E may include a first endothermic structure (200 in FIG. 1) connected to the base frame (510 in FIG. 1) and a second endothermic structure 300 connected to the side frame 520.

The second endothermic structure 300 may include an endothermic material. For example, the second endothermic structure 300 may include a phase change material and/or a super absorbent polymer. For example, the endothermic material of the second endothermic structure 300 may be the same as the endothermic material of the first endothermic structure 200.

The second endothermic structure 300 may include a plurality of fifth endothermic layers 310 attached to the side frame 520. The plurality of fifth endothermic layers 310 may be spaced apart from each other. The plurality of fifth endothermic layers 310 may each extend along the outer surface of the side frame 520 exposed to the outside. The plurality of fifth endothermic layers 310 may each overlap a corresponding cell assembly 110 among the plurality of cell assemblies 110 in a first horizontal direction (e.g., X-direction) or a second horizontal direction (e.g., Y-direction). When the second endothermic structure 300 has a plurality of fifth endothermic layers 310 spaced apart from each other, the plurality of fifth endothermic layers 310 are individually attached to the side frame 520, thus enabling individual replacement of the plurality of fifth endothermic layers 310.

In exemplary embodiments, the battery device 10E may further include a cover layer covering the plurality of fifth endothermic layers 310. The cover layer covers the plurality of fifth endothermic layers 310, thereby preventing the plurality of fifth endothermic layers 310 from being exposed to and damaged by the external environment. The cover layer may include an insulating material.

### (Eighth embodiment)

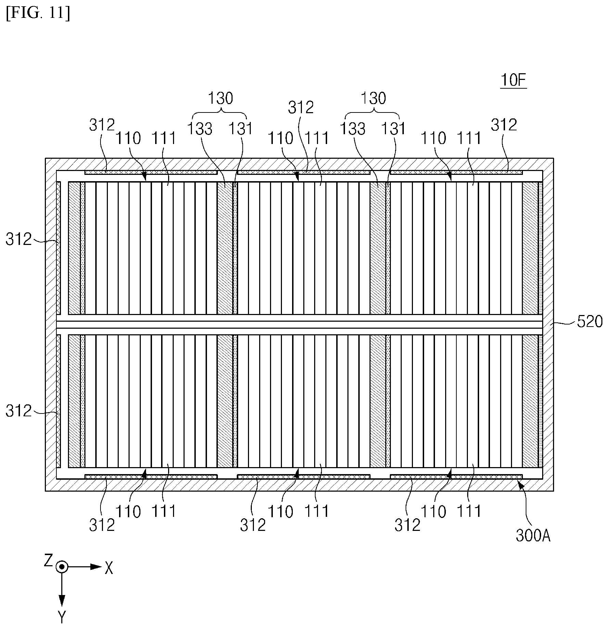

FIG. 11 is a cross-sectional view showing a battery device 10F according to exemplary embodiments of the present disclosure. Hereinafter, the battery device 10F shown in FIG. 11 will be described, focusing on the differences from the battery device 10E of FIG. 10.

Referring to FIG. 11, in the battery device 10F, the second endothermic structure 300A may include a plurality of sixth endothermic layers 312 attached to the inner surface of the side frame 520 facing the plurality of cell assemblies 110. The plurality of sixth endothermic layers 312 may each overlap a corresponding cell assembly 110 among the plurality of cell assemblies 110 in a first horizontal direction (e.g., X-direction) or a second horizontal direction (e.g., Y-direction).

### (Ninth embodiment)

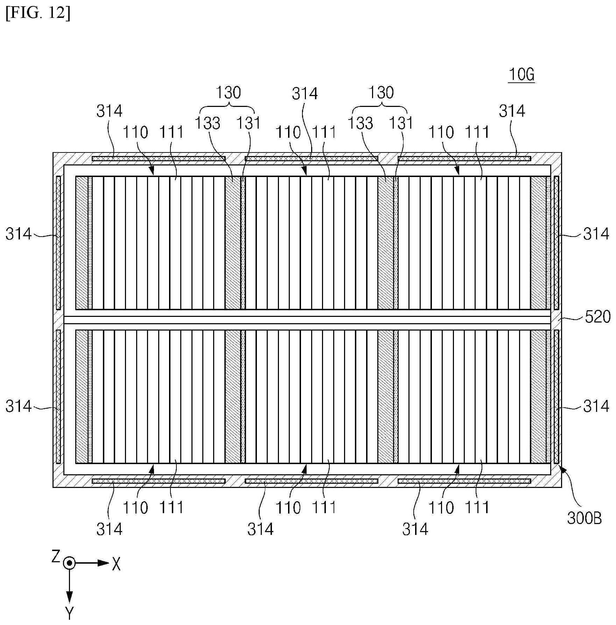

FIG. 12 is a cross-sectional view illustrating a battery device 10G according to exemplary embodiments of the present disclosure. Hereinafter, the battery device 10G shown in FIG. 12 will be described, focusing on the differences from the battery device 10E of FIG. 10.

Referring to FIG. 12, in the battery device 10G, the second endothermic structure 300B may include a plurality of seventh endothermic layers 314 disposed within the side frame 520. Each seventh endothermic layer 314 may at least partially fill a hollow part provided within the side frame 520. The plurality of seventh endothermic layers 314 may each be overlapped in a first horizontal direction (e.g., X-direction) or a second horizontal direction (e.g., Y-direction) with a corresponding cell assembly 110 among the plurality of cell assemblies 110.

According to exemplary embodiments of the present disclosure, the battery device may include an endothermic structure attached to the housing and configured to absorb heat. When a thermal event, such as thermal runaway of a battery cell, occurs, the heat generated from the cell assembly where the thermal event occurred is absorbed by the endothermic structure. This prevents and suppresses the transfer of heat generated from the affected cell assembly to other cell assemblies via the base frame.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A battery device comprising:
a plurality of cell assemblies each comprising a plurality of battery cells;
a housing comprising a base frame supporting the plurality of cell assemblies and a side frame surrounding the plurality of cell assemblies; and
a first endothermic structure connected to the base frame so as to be overlapping vertically with the plurality of cell assemblies and comprising a phase change material.

2. The battery device of claim 1, wherein
the first endothermic structure comprises a plurality of endothermic layers connected to the outer surface of the base frame exposed to the outside and spaced apart from each other, wherein
the plurality of endothermic layers is each overlapping vertically with a corresponding cell assembly among the plurality of cell assemblies.

3. The battery device of claim 2, further comprising:
a cover layer covering the plurality of endothermic layers.

4. The battery device of claim 1, further comprising:
a thermally conductive adhesive layer for attaching the plurality of cell assemblies to the base frame, wherein
the first endothermic structure comprises a plurality of endothermic layers connected to the thermally conductive adhesive layer, and
the plurality of endothermic layers is each overlapping vertically with a corresponding cell assembly among the plurality of cell assemblies.

5. The battery device of claim 1, wherein
the base frame comprises:
a first channel configured for cooling fluid to flow; and
a second channel separated from the first channel, wherein
the first channel and the second channel each extend horizontally from one side of the base frame, wherein
the first endothermic structure is accommodated within the second channel of the base frame, and comprises an endothermic layer overlapping vertically with the plurality of cell assemblies.

6. The battery device of claim 5, wherein
the endothermic layer is exposed outside the base frame through the one side of the base frame.

7. The battery device of claim 5, further comprising:
a thermal barrier layer inserted within the base frame and disposed between the first channel and the second channel.

8. The battery device of claim 1, wherein
the base frame comprises:
a first channel configured for cooling fluid to flow; and
a second channel separated from the first channel and extending from the outer surface of the base frame, wherein
the first endothermic structure comprises:
a first endothermic layer extending along the outer surface of the base frame; and
a second endothermic layer connected to the first endothermic layer and accommodated in the second channel of the base frame.

9. The battery device of claim 1, further comprising:
a second endothermic structure connected to the side frame and comprising a phase change material.

10. The battery device of claim 9, wherein
the second endothermic structure is connected to the outer surface of the side frame exposed to the outside.

11. The battery device of claim 9, wherein
the second endothermic structure is connected to the inner surface of the side frame facing the plurality of cell assemblies.

12. The battery device of claim 9, wherein
the second endothermic structure is inserted within the side frame.

13. A battery device comprising:
a plurality of cell assemblies each comprising a plurality of battery cells;
a housing comprising a base frame supporting the plurality of cell assemblies and a side frame surrounding the plurality of cell assemblies; and
an endothermic structure connected to the base frame and comprising a phase change material, wherein
the base frame comprises a first channel configured for cooling fluid to flow and a second channel separated from the first channel, wherein
the endothermic structure is accommodated within the second channel of the base frame and comprises a first endothermic layer overlapping vertically with the plurality of cell assemblies.

14. The battery device of claim 13, wherein
the endothermic structure further comprises a second endothermic layer extending along the outer surface of the base frame exposed to the outside, wherein
the first endothermic layer and the second endothermic layer are connected to each other.

15. The battery device of claim 13, further comprising:
a thermal barrier layer inserted within the base frame and disposed between the first channel and the second channel.
